# EUROPEAN PATENT APPLICATION

(11) **EP 4 385 608 A1**
(43) Date of publication of application: **19.06.2024**
(21) Application number: 22383229.6
(22) Date of filing: 16.12.2022
(51) Int. Cl.: B01D 53/34, B01D 53/56, B01D 53/62, B01D 53/84

(54) **URBAN AIR DECONTAMINATION SYSTEM**

(71) Applicant: Bromalgae, S.L., 48901 Barakaldo (Vizcaya) (ES)
(72) Inventor: Garcia Bárcena, Teresa, 48901 Barakaldo (Vizcaya) (ES); Alonso Hornes, Julen, 48901 Barakaldo (Vizcaya) (ES); Barredo Gallarza, Guillermo, 48901 Barakaldo (Vizcaya) (ES)
(74) Representative: Balder IP Law, S.L.

(57) **Abstract**

The invention relates to an urban air decontamination system, comprising: a column that can be installed vertically on the ground, an air inlet at the lower level of the column, air suction means, and a microalgae-based photobioreactor, suitable for capturing NOx and CO2, and releasing O2, and which receives the air sucked in from the outside. The system also has an ambient light inlet arranged to allow ambient light to pass into the photobioreactor, and a purified air outlet, located downstream of the photobioreactor and located at the upper level of the column. The invention provides a system for the decontamination of urban air that can be manufactured at low cost and with a small footprint so that it can be installed in multiple locations in a city or town.

## Description

### TECHNICAL FIELD

The invention relates to a system for the decontamination of urban air by capturing NOx and CO2 using a microalgae photobioreactor.

An object of the invention is to provide a system for urban air decontamination, which can be manufactured at low cost, and which has a reduced size so that it can be installed in multiple locations in a city or town.

### STATE OF THE ART

Atmospheric pollution in our cities and towns, mainly due to CO, CO2, hydrocarbons, NOx, SOx, metals and other compounds, is a serious problem requiring an urgent solution.

Currently, some efforts have been made to decrease the environmental pollution produced by industrial plants, but little has been done to decrease the pollution produced by transport vehicles and civil human activity.

Methodologies for air pollution are mainly based on molecular absorption or chemical transformation, but these methods again are focused to reduce industrial emissions, with very expensive and large equipment in industrial plants.

Therefore, there is a need for technologies and systems for air pollution abatement, especially suitable to be used in urban areas and that are economically feasible.

### DESCRIPTION OF THE INVENTION

An aspect of the invention relates to an urban air decontamination system, comprising:
a column that can be installed vertically on the ground,
an air inlet at the bottom level of the column,
air suction means for drawing air through the air inlet and circulating it inside the column,
a microalgae-based photobioreactor suitable for capturing NOx and CO2 and releasing O2, where the photobioreactor is connected to the air suction means to receive inlet air,
an ambient light inlet arranged to allow ambient light to pass into the photobioreactor, and
a purified air outlet downstream of the photobioreactor, and located at the upper level of the column.

Preferably, the photobioreactor is adapted to capture NOx and CO2, and release O2, through a photosynthetic process by the microalgae.

The CO2 and NOx present in the air are utilised by the microalgae. CO2 is absorbed in the photosynthetic process by the following reaction:

6CO 2 + 6H 2 O → C 6 H 12 O 6 + 6O 2.

Part of the NOx goes into solution as NO3 - or NO2 - (as salts). Microalgae use nitrogen salts as a source of N, which is essential for their growth. Microalgae therefore obtain carbon from CO2. This carbon will be used for all those internal processes and compounds that need it, such as cell wall cellulose, starches, sugars, etc. The N obtained will be used mainly for the production of proteins, amino acids and compounds with nitrogenous bases.

The system may comprise lighting means arranged to illuminate the photobioreactor artificially, and a control unit adapted to activate the lighting means when the ambient light is below a predetermined value, for example at night, so as to allow photosynthesis in the algae throughout the day.

The system may include an air diffuser at the inlet of the photobioreactor, suitable for dissolving the inlet air in the form of bubbles in the liquid medium of the photobioreactor. These air diffusers are known commercially available elements, that consist of a ceramic material or a rubber membrane with a multitude of holes that cause the dispersion of the incoming air in the form of bubbles, in the familiar manner.

The system may have sensors to measure the concentration of NOx and CO2 in the air both at the inlet of the system and at the outlet of the photobioreactor.

In addition, the system may have a sensor to measure the O2 concentration at the outlet of the photobioreactor.

The control unit is adapted to receive and process measurements from the sensors at the inlet and outlet of the photobioreactor to determine the urban air cleaning capacity of the system.

The system may have at least one filter upstream of the photobioreactor, suitable for retaining micro-organisms and pollen.

Preferably, the system has an access opening to the photobioreactor, so that the culture produced in the photobioreactor can be extracted from the outside.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a schematic representation of the system of the invention.
Figure 2.- shows also in a schematic representation, a more detailed representation of the system of the invention.

### DESCRIPTION OF WAYS OF CARRYING OUT THE INVENTION

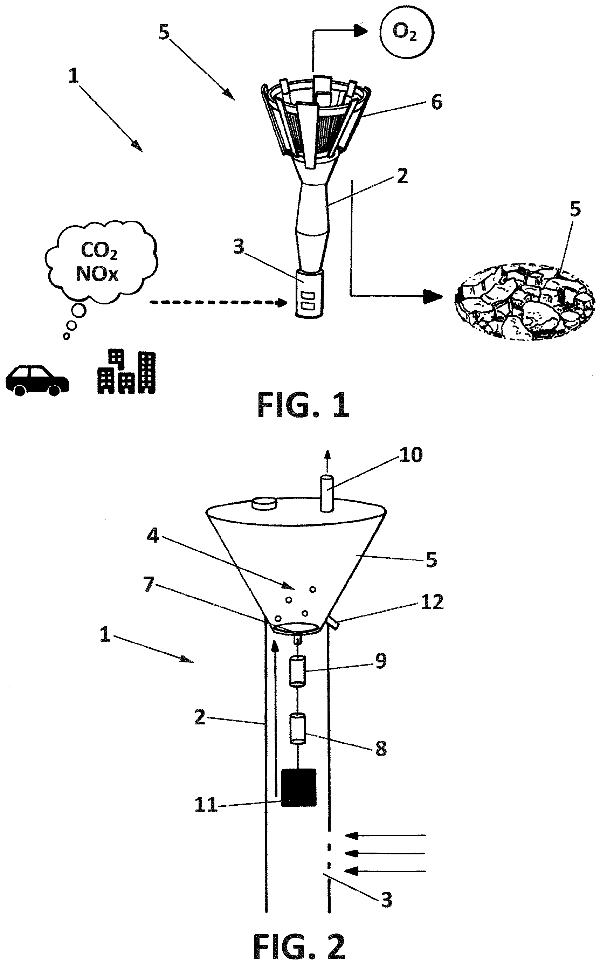

**Figures 1** and **2** show a system (1) for urban air decontamination, comprising: a column (2) that can be installed vertically on the ground, an air inlet (3) at the lower level of the column (2), and air suction means (11) located inside the column (2) to draw air through the air inlet and circulate it inside the column, as shown in **Figure 2****.**

The suction means (11) may consist of a blower positioned at the inlet (3), which draws in ambient air through a grille. The blower may have a capacity of for example of 30m3/h, that can be regulated depending on the desired flow rate.

Optionally, a heating element can be installed at the inlet (3) to heat the inlet air when necessary, for example in winter, to adapt it to the optimal living conditions of the microalgae.

CO2 and NOx sensors can be used to measure the concentration of these compounds at the inlet.

Ambient air drawn by the blower, passes through a first filter (8) with a 1 µm pitch to remove pollutants such as pollen or dust, and then through a second filter (9) downstream of the first filter with a pitch of 0.1 µm to filter out microorganisms such as fungi and batteries. In this way, the inlet air is cleaned to avoid contaminating the microalgae culture.

The filtered air enters a photobioreactor (5) through an air diffuser (7) located at the inlet of the photobioreactor (5), which is suitable to produce the dispersion of the inlet air in the form of bubbles (4) in the liquid medium of the photobioreactor, and which also acts as a medium agitation system, and thanks to which the NOx and CO2 come into contact with the microalgae.

The air flow that can pass through the diffuser can be from 2 to 12 Nm3/h, for example.

As can be seen in the figures, the photobioreactor (5) is shaped like an inverted cone and is located at the top of the column (2), and the diffuser (7) is located at the lower base of the cone.

The system (1) has an ambient light inlet (6), arranged to allow ambient light to pass into the photobioreactor (5). For this purpose, the photobioreactor (5) is preferably made of transparent PVC to allow the photobioreactor (5) to be illuminated by sunlight.

In the upper part of the photobioreactor (5), there are degasifiers (10) that allow the excess air and the O2 generated to escape. In this air outlet, CO2 and NOx can be measured by means of sensors that allow the absorption capacity of these by the microalgae to be quantified.

The system integrates artificial lighting means (not shown) arranged to illuminate the photobioreactor and a control unit adapted to activate the lighting means when the ambient light is below a predetermined value, for example at night.

The photobioreactor (5) is provided with an access (12) to allow the culture produced in the photobioreactor (5) to be removed from the outside and the photobioreactor (5) to be emptied.

The system is capable of treating 100 Nm3/h of urban air with a NOx treatment efficiency of 90% and treatment of 1 Tn of CO2 per year. For this purpose, the photobioreactor (5) can have a cultivation capacity of for example 300 litres.

Optionally, a display can show the concentration in ppm of CO2 and NOx at the inlet and outlet of the system, so that the difference of these values specifies the abatement capacity of the system for these gases.

## Claims

1. Urban air decontamination system, comprising:
a column that can be installed vertically on the ground,
an air inlet at the lower level of the column,
air suction means located inside the column to suck air through the air inlet and circulate it inside the column,
a microalgae-based photobioreactor suitable for capturing NOx and CO2 and releasing O2, where the photobioreactor is connected to the air suction means to receive inlet air from inside the column,
an ambient light inlet arranged to allow ambient light to pass into the photobioreactor, and
a purified air outlet downstream of the photobioreactor, and located at the upper level of the column.

2. System according to claim 1, further comprising lighting means arranged to illuminate the photobioreactor and a control unit adapted to activate the lighting means when the ambient light is below a predetermined value.

3. System according to claim 1 or 2, further comprising an air diffuser located at the inlet of the photobioreactor, suitable for producing dissolution of the inlet air in the form of bubbles.

4. System according to any of the previous claims, wherein the photobioreactor is adapted to capture NOx and CO2, and release O2, by means of a photosynthetic process by means of the microalgae.

5. System according to any of the previous claims, which has sensors to measure the concentration of NOx and CO2 in the inlet air to the photobioreactor, and at the outlet of the photobioreactor.

6. System according to any of the previous claims, which has at least one filter located upstream of the photobioreactor, suitable for retaining microorganisms and pollen.

7. System according to any of the previous claims, which has a blower arranged to compress incoming air from outside and feed it to the filter.

8. System according to any of the previous claims, which has a sensor to measure the O2 concentration at the photobioreactor outlet.

9. System according to any one of claims 2 to 5, wherein the control unit is adapted to receive and process measurements from the sensors at the inlet and outlet of the photobioreactor, to determine the urban air purification capacity of the system.

10. System according to any of the previous claims, which has an access to the photobioreactor, to allow the extraction from the outside of the crop produced therein.

11. System according to any of the previous claims, where the photobioreactor has the shape of an inverted cone and is located at the top of the column.

12. System according to claim 11, wherein the diffuser is located at the lower base of the cone.

13. System according to any one of the preceding claims, wherein the photobioreactor has a transparent container.
